# EUROPEAN PATENT SPECIFICATION

(11) **EP 1 183 465 B1**
(45) Date of publication and mention of the grant of the patent: **05.09.2007**
(21) Application number: 01912007.0
(22) Date of filing: 20.03.2001
(51) Int. Cl.: F04B 39/10, F04B 39/00

(54) **A VALVE ASSEMBLY WITH DAMPER MEANS**
VENTILANORDNUNG MIT DÄMPFUNGSVORRICHTUNG
ENSEMBLE CLAPET MECANISME AMORTISSEUR

(30) Priority: 22.03.2000 GB 0006978
(43) Date of publication of application: 06.03.2002
(73) Proprietor: Arctic Circle Limited, Hereford HR2 6JL (GB)
(72) Inventor: Lawson, Stuart, Thatcham, Berkshire RG18 3BH (GB)
(74) Representative: Jones, Graham Henry
(86) International application number: PCT/GB2001/001240
(87) International publication number: WO 2001/071189

(56) References cited:
- DE-A- 3 023 928
- US-A- 4 573 881
- US-A- 5 275 541
- US-A- 5 895 208

## Description

This invention relates to a valve assembly and, more especially, this invention relates to a valve assembly with damper means.

Valve assemblies comprising a reed and a port which is opened and closed by the reed are well known. Such valve assemblies are often used in compressors or pumps where the reed acts as an automatic valve for controlling the opening and closing of the port. The compressors may be reciprocating compressors for refrigerant vapour in refrigerant apparatus. Known valve assemblies may be such that the port is in a valve plate at the top of a cylinder containing a reciprocating piston. When pressure in the cylinder drops below suction pressure, there is a delay in the valve opening because of factors such for example as the reed sticking to a valve seat around the port. Delays in the opening of the valve result in a significant pressure drop existing across the reed as the valve assembly opens. The effect of this pressure drop is that the reed initially opens much further than its optimum lift and this introduces unnecessary bending stresses in the reed. Furthermore, after the reed has initially opened, it tends to oscillate to and fro. If this oscillation is too vigorous, then it may delay closing of the reed on the port. Prompt closing is usually required, for example in refrigerant apparatus when a piston in a cylinder is at bottom dead centre and the prompt closing gives better filling of the cylinder with refrigerant.

US-A-5,275,541 discloses a diaphragm pump having a first fluid-operated valve which operates when the diaphragm performs a suction stroke, and a second fluid-operated valve which opens when the diaphragm performs a compression stroke. The diaphragm pump is constructed to operate with a reduction of noise, and also with a reduction of valve wear.

It is an aim of the present invention to reduce the above mentioned problems.

Accordingly, the present invention provides a valve plate assembly for a compressor, which valve plate assembly is characterised by the combination of a valve plate and a reed valve, the valve plate having a suction side; the reed valve being such that it comprises a reed, a port which is opened and closed by the reed, and damper means for mechanically damping motion of the reed; the port being positioned in the valve plate; the reed being positioned on a side of the valve plate which closes a cylinder of a piston and cylinder arrangement whereby the reed flexes into the cylinder when the reed opens the port; and the damper means comprising a tube which is connected to the valve plate, which extends vertically into the suction side, which is in communication with the port on a side of the port remote from the reed so as to enable the passage of refrigerant fluid through the compressor, and which is of such a size that, in use of the valve plate assembly, the tube contains a column of refrigerant fluid which is sufficient to provide substantial mechanical damping of the motion of the reed .

The use of the damping means for the reed avoids unnecessary lift of the reed as it initially opens from the port. This in tum avoids subjecting the reed to unnecessary bending stresses. The use of the damper means also dampens the subsequent oscillations of the reed after it has initially has moved away from the port, and the damping of the oscillations helps to ensure that the reed closes promptly on the port. In cases where the valve plate assembly is used in piston and cylinder refrigerant apparatus, then the valve is able to close promptly when the piston is at bottom dead centre, thereby resulting in better filling of the cylinder with refrigerant.

The valve plate assembly may be one in which the port is in the valve plate, and in which the length of the tube is greater than the diameter of the port. The length of the tube may be at least twice the diameter of the port. Generally, the tube will provide more damping as its length increases. The length of the tube may vary depending upon where the valve plate assembly is used.

The present invention also provides a compressor including the valve plate assembly of the invention.

The present invention further provides a compressor for refrigeration apparatus, which compressor comprises a cylinder block, a cylinder in the cylinder block, a piston in the cylinder, and a valve plate assembly: the valve plate assembly being characterised by the combination of a valve plate and a reed valve; the reed valve being such that it comprises a reed, a port which is opened and closed by the reed, and damper means for mechanically damping motion of the reed; the damper means comprising a tube which is attached to the valve plate, which is in communication with the port on a side of the port remote from the reed so as to enable the passage of refrigerant fluid through the compressor, and which is of such a size that, during use of the compressor, the tube contains a column of refrigerant fluid which is sufficient to dampen oscillatory backwards and forwards motion of the reed whereby unnecessary bending stresses of the reed are avoided, whereby the reed closes the port faster than without the damping, and whereby the refrigerant fluid flows into an inlet side of the valve plate with a smoother flow than without the damping and thereby reduces on noise generated by the compressor.

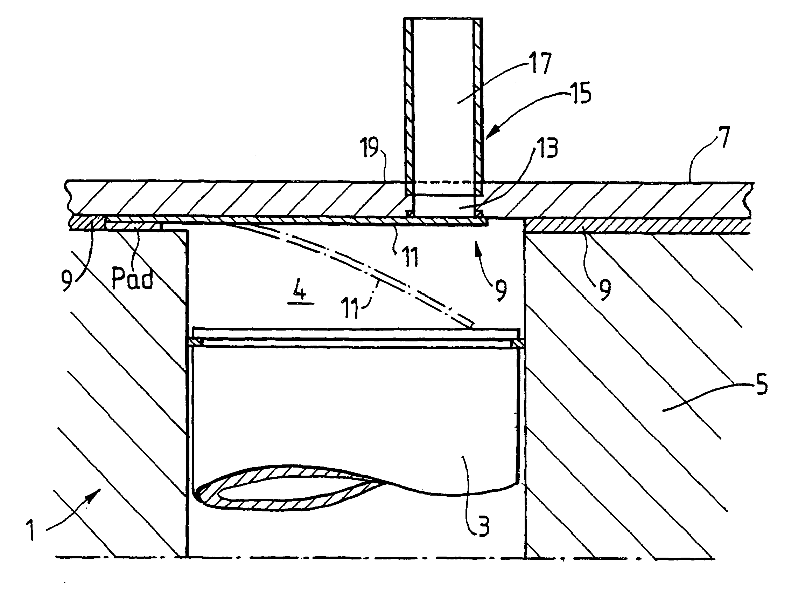

An embodiment of the invention will now be described solely by way of example and with reference to the accompanying drawing which is a simplified cross sectional view of a compressor cylinder provided with a valve plate assembly.

Referring to the drawing, there is shown part of a compressor 1 comprising a piston 3 which reciprocates in a cylinder 4 formed in a cylinder block 5. The compressor 1 also comprises a cylinder head and a valve plate 7. The valve plate 7 is attached to the cylinder block 5 by means of mounting bolts (not shown) and a gasket 8. The valve plate 7 may be divided by a baffle (not shown) into an inlet side and a discharge side. The inlet side is a suction side. For simplicity of illustration, the discharge side has not been shown in the drawing.

A valve plate assembly for the compressor 1 comprises the cylinder head, the inlet/suction side, the valve plate 7, and a reed valve 9. The reed valve 9 comprises a reed 11 and a port 13. which is provided in the valve plate 7 and which is opened and closed by the reed 11. The reed valve 9 also comprises damper means 15 for the reed 11.

The damper means 15 comprises a tube 17 which is in communication with the port 13 on a side 19 of the port 13 remote from the reed 11. The tube 17 is of such a size that, in use of the valve plate assembly, the tube 17 contains sufficient fluid to provide substantial damping for the reed 11.

As can be seen from the drawing, the tube 17 is such that it extends vertically above the port 13. The port 13 is in the valve plate 7, and the tube 17 is of a length which is several times greater than the diameter of the port 13.

When the piston 3 moves downwardly in the cylinder 4 towards its bottom dead centre position, it causes the reed 11 to move away from the port 13 as indicated by the position of the reed 11 shown in broken lines in the drawing. Without the damping means 15, the reed 11 could initially bend too far and thereby become subject to unnecessary bending stresses. After the reed 11 has initially moved away from the port 13, it tends to oscillate backwards and forwards over an area. If the oscillations are excessive, they tend to delay the prompt closing of the valve 11 about the port 13 when the piston 3 reaches bottom dead centre. The damper means 15 is also effective to ensure that the oscillations of the reed 11 are reduced so that the reed 11 is able to close the suction port 13 faster than it would normally do. The dampening of the reed 11 by the damper means 15 ensures that refrigerant is able to flow into the suction side of the valve plate 7 with a much smoother flow than would be the case if the damper means 15 were not employed. The smoother flow is advantageous in that it results in the production of less noise. It is always desirable to reduce on the noise output from compressors used in refrigerant apparatus.

The damper means 15 operates by effectively providing a plug of fluid in the tube 17. For simplicity of explanation, the fluid being pumped by the compressor 1 is considered to be incompressible. At the instant the reed 11 starts to open, there is a significant pressure drop across the reed 11. If the pressure drop were to be maintained while the reed valve 9 opened, the force on the reed 11 would deflect it well past its equilibrium position as indicated above. The geometry of the reed valve 9 may act to modify the force acting on the reed 11, but the reed 11 will still overshoot, and then it will cycle about an equilibrium position as mentioned above.

For the force on the reed 11 to be maintained, as the reed 11 opens, the fluid above the reed 11 must move with the reed. In order for the fluid to move with the reed 11, the fluid must accelerate and it will absorb energy. The energy absorbed by the fluid is a function of the velocity squared and its mass. The more energy that is absorbed by the fluid, the less energy there is for transferral to the reed 11, and thus the maximum deflection of the reed 11 is able to be reduced. The required velocity of the fluid in the tube 17 is a function of the velocity of the reed 11. The tube 17 provides a mass of fluid which moves at the same velocity as the reed 11, and which results in less energy being transferred to the reed 11.

When the reed 11 tries to close, the opposite effect occurs. The reed 11 now has to stop the plug of fluid in the tube 17 which is flowing towards it, thus damping the closing of the reed 11.

By definition, the compressor 1 does not pump incompressible fluids and therefore the detail of the damping as described above is modified but, nevertheless, the damping principle as described above still applies.

By using the damper means 15, the volumetric efficiency of the compressor 1 is able to be improved. The noise generated by the compressor 1 and its associated equipment is able to be reduced. Unwanted failures of the reed 11 are also able to be reduced.

It is to be appreciated that the embodiment of the invention described above with reference to the accompanying drawing has been given by way of example only and that modifications may be effected. Thus, the drawing shows the tube 17 as a simple tube which is of the same diameter as the port 13. If desired, the tube 17 may be of a different diameter to the port 13. The tube 17 may also be positioned remote from the port 13 and connected directly to the port 13. The tube 17 could be formed as a passage in a cylinder head or in some other means. The reed 11 may be a reed which has a projection which engages with a stop member in the cylinder wall, the stop member limiting movement of the reed to a small degree. Such a reed is disclosed in UK Patent No. 2105821A. The reed may also be an elongate resilient reed of the type disclosed in UK Patent No. 2161583. The reed may still further be a reed with a straight end as disclosed in UK Patent Application No. 9825550.8.

## Claims

1. A valve plate assembly for a compressor (1), which valve plate assembly is **characterised by** the combination of a valve plate (7) and a reed valve (9), the valve plate (7) having a suction side; the reed valve (9) being such that it comprises a reed (11), a port (13) which is opened and closed by the reed (11), and damper means (15) for mechanically damping motion of the reed (11); the port (13) being positioned in the valve plate (7); the reed (11) being positioned on a side of the valve plate (7) which closes a cylinder (4) of a piston and cylinder arrangement (3, 4) whereby the reed (11) flexes into the cylinder (4) when the reed (11) opens the port (13); and the damper means (15) comprising a tube (17) which is connected to the valve plate (7), which extends vertically into the suction side, which is in communication with the port (13) on a side of the port (13) remote from the reed (11) so as to enable the passage of refrigerant fluid through the compressor (1), and which is of such a size that, in use of the valve plate assembly, the tube (17) contains a column of refrigerant fluid which is sufficient to provide substantial mechanical damping of the motion of the reed (11).

2. A valve plate assembly according to claim 1 in which the port (13) is in the valve plate (7) and in which the length of the tube (17) is greater than the diameter of the port (13).

3. A valve plate assembly according to claim 2 in which the length of the tube (17) is at least twice the diameter of the port (13),

4. A compressor (1) including a valve plate assembly according to any one of the preceding claims.

5. A compressor (1) for refrigeration apparatus, which compressor (1) comprises a cylinder block (5), a cylinder (4) in the cylinder block (5), a piston (3) in the cylinder (4), and a valve plate assembly: the valve plate assembly being **characterised by** the combination of a valve plate (7) and a reed valve (9); the reed valve (9) being such that it comprises a reed (11), a port (13) which is opened and closed by the reed (11), and damper means (15) for mechanically damping motion of the reed (11); the damper means (15) comprising a tube (17) which is attached to the valve plate (7), which is in communication with the port (13) on a side of the port (13) remote from the reed (11) so as to enable the passage of refrigerant fluid through the compressor (1), and which is of such a size that, during use of the compressor (1), the tube (17) contains a column of refrigerant fluid which is sufficient to dampen oscillatory backwards and forwards motion of the reed (11) whereby unnecessary bending stresses of the reed (11) are avoided, whereby the reed (11) closes the port (13) faster than without the damping, and whereby the refrigerant fluid flows into an inlet side of the valve plate (7) with a smoother flow than without the damping and thereby reduces on noise generated by the compressor (1).

## Patentansprüche

1. Eine Ventilplattenanordnung für einen Kompressor (1), welche Ventilplattenanordnung **gekennzeichnet ist durch** die Kombination einer Ventilplatte (7) und eines Plättchenventils (9), wobei die Ventilplatte (7) eine Saugseite hat; das Plättchenventil (9) derart ist, daß es ein Plättchen (11), eine Öffnung (13), die **durch** das Plättchen geöffnet und geschlossen wird und Dämpfungseinrichtungen (15) um Bewegung des Plättchens (11) mechanisch zu dämpfen aufweist; wobei die Öffnung (13) in der Ventilplatte (7) angeordnet ist; das Plättchen (11) an einer Seite der Ventilplatte (7) angeordnet ist, die einen Zylinder (4) einer Kolben- und Zylinder-Anordnung (3, 4) schließt, wodurch das Plättchen (11) sich in den Zylinder (4) biegt, wenn das Plättchen (11) die Öffnung (13) öffnet; und die Dämpfungseinrichtung (15) ein Rohr (17) aufweist, das mit der Ventilplatte (7) verbunden ist, das sich senkrecht in die Saugseite erstreckt, das in Verbindung mit der Öffnung (13) an einer Seite der Öffnung (13) entfernt von dem Plättchen (11) ist, um den Durchgang von Kühlfluid **durch** den Kompressor (11) zu ermöglichen, und das von einer solchen Größe ist, daß, bei der Verwendung der Ventilplattenanordnung, das Rohr (17) eine Säule von Kühlfluid enthält, die hinreichend ist, um eine wesentliche mechanische Dämpfung des Plättchens (11) zu liefern.

2. Eine Ventilplattenanordnung nach Anspruch 1, in der die Öffnung (13) in der Ventilplatte (7) ist und in der die Länge des Rohrs (17) größer als der Durchmesser der Öffnung (13) ist.

3. Eine Ventilplattenanordnung nach Anspruch 2, in der die Länge des Rohrs (17) mindestens zweimal der Durchmesser der Öffnung (13) ist.

4. Ein Kompressor (1), der eine Ventilplattenanordnung nach einem der vorhergehenden Anspruche aufweist.

5. Ein Kompressor (1) für ein Kühlgerät, welcher Kompressor (1) einen Zylinderblock (5), einen Zylinder (4) im Zylinderblock (5), einen Kolben (3) im Zylinder (4) und eine Ventilplattenanordnung aufweist: wobei die Ventilplattenanordnung **gekennzeichnet ist durch** die Kombination einer Ventilplatte (7) und eines Plättchenventils (9); wobei das Plättchenventil (9) derart ist, daß es ein Plättchen (11), eine Öffnung (13), die **durch** das Plättchen (11) geöffnet und geschlossen wird und Dämpfungseinrichtungen (15) um Bewegung des Plättchens (11) mechanisch zu dämpfen aufweist, wobei die Dämpfungseinrichtung (15) ein Rohr (17) aufweist, das an der Ventilplatte (7) angebracht ist, das in Verbindung mit der Öffnung (13) an einer Seite der Öffnung (13) entfernt von dem Plättchen (11) ist, um den Durchgang von Kühlfluid **durch** den Kompressor (1) zu ermöglichen, und das von einer solchen Größe ist, daß, während der Verwendung des Kompressors (1), das Rohr (17) eine Säule aus Kühlfluid enthält, die hinreichend ist, um die schwingende Rückwärts- und Vorwärtsbewegung des Plättchens (11) zu dämpfen, wodurch unnötige Biegebeanspruchungen des Plättchens (11) vermieden werden, wodurch das Plättchen (11) die Öffnung (13) schneller als ohne die Dämpfung schließt und wodurch das Kühlfluid in eine Einlaßseite der Ventilplatte (7) mit einem glatteren Fluß als ohne die Dämpfung fließt und **dadurch** Geräusch, das **durch** den Kompressor (1) erzeugt wird, vermindert.

## Revendications

1. Ensemble plaque porte - soupape pour un compresseur (1), lequel ensemble plaque porte - soupape est **caractérisé par** la combinaison d'une plaque porte - soupape (7) et d'une soupape à lame (9), la plaque porte - soupape (7) ayant un côté aspiration, la soupape à lame (9) étant telle qu'elle comprend une lame (11), un orifice (13) qui est ouvert et fermé par la lame (11), et d'un mécanisme amortisseur (16) pour amortir mécaniquement le mouvement de la lame (11), l'orifice (13) étant positionné dans la plaque porte - soupape (7), la lame (11) étant positionnée sur un côté de la plaque porte - soupape (7) qui ferme un cylindre (4) d'un agencement piston et cylindre (3, 4), dans lequel la lame (11) fléchit dans le cylindre (4) quand la lame (11) ouvre l'orifice (13), et le mécanisme amortisseur (15) comprenant un tube (17) qui est connecté à la plaque porte - soupape (7) et s'étend verticalement dans le côté aspiration qui est en communication avec l'orifice (13) sur un côté de l'orifice (13) à distance de la lame (11) de manière à permettre le passage d'un fluide réfrigérant dans le compresseur (1) et qui est d'une taille telle que, quand l'ensemble plaque porte - soupape est en service, le tube (17) contient une colonne de fluide réfrigérant qui est suffisante pour fournir un amortissement mécanique substantiel du mouvement de la lame (11).

2. Ensemble plaque porte - soupape selon la revendication 1 dans lequel l'orifice (13) se trouve dans la plaque porte - soupape (7) et dans lequel la longueur du tube (17) est plus grande que le diamètre de l'orifice (13).

3. Ensemble plaque porte - soupape selon la revendication 2 dans lequel la longueur du tube (17) est au moins le double du diamètre de l'orifice (13).

4. Compresseur comprenant un ensemble plaque porte - soupape selon l'une quelconque des revendications précédentes.

5. Compresseur (1) pour appareil de réfrigération, lequel compresseur (1) comprend un bloc cylindre (5), un cylindre (4) dans le bloc cylindre (5), un piston (3) dans le cylindre (4) et un ensemble plaque porte - soupape, l'ensemble plaque porte - soupape étant **caractérisé par** la combinaison d'une plaque porte - soupape (7) et d'une soupape à lame (9), la soupape à lame (9) étant telle qu'elle comprend une lame (11), un orifice (13) qui est ouvert et fermé par la lame (11), et d'un mécanisme amortisseur (15) pour amortir mécaniquement le mouvement de la lame (11), le mécanisme amortisseur (15) comprenant un tube (17) qui est connecté à la plaque porte - soupape (7), qui est en communication avec l'orifice (13) sur un côté de l'orifice (13) à distance de la lame (11) de manière à permettre le passage d'un fluide réfrigérant dans le compresseur (1) et qui est d'une taille telle que, pendant l'utilisation du compresseur (1), le tube (17) contient une colonne de fluide réfrigérant qui est suffisante pour amortir le mouvement oscillatoire en arrière et en avant de la lame (11) moyennant quoi des contraintes de flexion inutiles de la lame (11) sont évitées, moyennant quoi la lame (11) ferme plus rapidement l'orifice (13) que sans l'amortissement et moyennant quoi le fluide réfrigérant s'écoule dans un côté entrée de la plaque porte - soupape (7) de manière plus égale que sans l'amortissement et réduit de ce fait le bruit généré par le compresseur (1).
